# EUROPÄISCHE PATENTSCHRIFT

(11) **EP 1 671 825 B1**
(45) Veröffentlichungstag und Bekanntmachung des Hinweises auf die Patenterteilung: **29.07.2009**
(21) Anmeldenummer: 05027925.6
(22) Anmeldetag: 20.12.2005
(51) Int. Cl.: B60H 1/00

(54) **Rückschlagklappe, insbesondere für ein Belüftungssystem**
Check valve, in particular for a ventilation system
Clapet anti-retour, en particulier pour un système d'aération

(30) Priorität: 20.12.2004 DE 102004062426
(43) Veröffentlichungstag der Anmeldung: 21.06.2006
(73) Patentinhaber: Behr GmbH & Co. KG, 70469 Stuttgart (DE)
(72) Erfinder: Litwing, Erich, 73565 Spraitbach (DE); Schrumpf, Michael, 70186 Stuttgart (DE)
(74) Vertreter: Mantel, Berthold Friedrich

(56) Entgegenhaltungen:
- DE-A1- 2 016 664
- DE-A1- 3 323 176
- DE-C1- 19 524 200
- DE-C1- 19 748 425
- US-A- 4 691 623

## Beschreibung

Die Erfindung betrifft eine Heizungs- und/oder Klimaanlage mit einem Luftführungsgehäuse und einer Rückschlagklappe, insbesondere für ein Belüftungssystem, gemäß dem Oberbegriff des Anspruches 1. Eine gattungsgemäße Anlage ist in der DE 332 317 6 A1 offenbart.

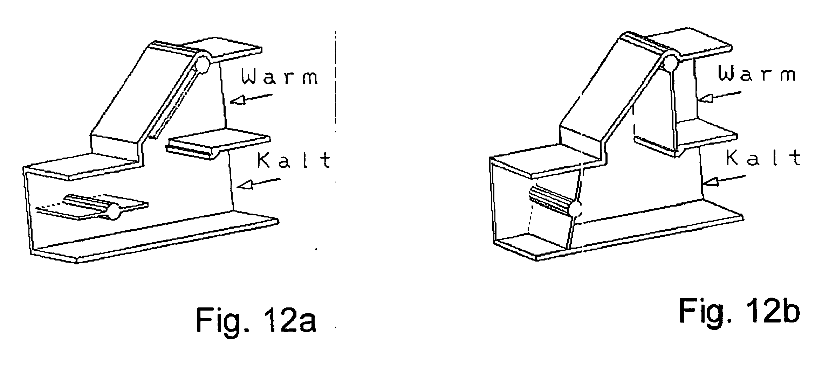

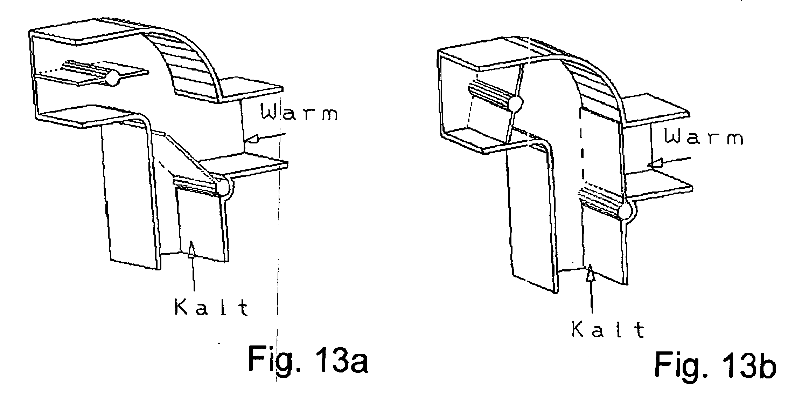

Bei Kraftfahrzeug-Klimaanlagen ist es durch dass Schließen von Austrittsdüsen in den Fahrgastinnenraum möglich, dass in der Klimaanlage kalte Luft an die Rückseite des Heizkörpers (bzw. in den Wannkanal) gelangt. Dies soll vermieden werden, um die Leistung des Heizkörpers nicht zu beeinträchtigen. Dazu werden herkömmlicherweise einseitig gelagerte Rückschlagklappen verwendet. Zwei Beispiel dieser herkömmlichen Rückschlagklappen sind in den Figuren 12a,b und 13a,b dargestellt. Die den Klappen nachfolgenden Austrittsdüsen sind vorliegend in der Zeichnung als Klappen dargestellt, jedoch sind beliebige andere den Luftaustritt regelnde Elemente möglich. Als Rückschlagklappen können sowohl oben gelagerten Klappen (siehe Figuren 12a und 12b) als auch unten gelagerten Klappen (siehe Figuren 13a und 13b) vorgesehen sein, jedoch lassen derartige Rückschlagklappen noch Wünsche offen. Die Rückstellung der Rückschlagklappen erfolgt selbsttätig, beispielsweise in Folge der Gewichtskraft oder eines die Rückschlagklappe schließenden Luftstroms, wobei jedoch auch eine Feder - oder ein anderes Element ohne äußere Regelung und Betätigung - für die Rückstellung vorgesehen sein kann.

Aus der DE 20 16 664 A1 ist eine Mischklappe bekannt, die zur Mischung zweier Luftströme dient, wobei die Mischklappe fest mit einer Welle verbunden ist, die in dem Bereich gelagert ist, in welchem die beiden Luftströme zusammentreffen, wobei einer der beiden Luftstrom senkrecht zum anderen Luftstrom in den weiterführenden Luftkanal einmündet. Die Mischklappe wird durch eine Mehrzahl von rechteckförmigen Einzelelementen gebildet, welche rechteckförmige Öffnungen im Gehäuse verdecken oder freigeben können, durch die beide Luftströme in den weiterführenden Luftkanal eintreten. Die Betätigung erfolgt mittels eines Klappenmotors, der die Welle der Mischklappe dreht. Um ein Verschließen der Öffnungen zu gewährleisten, sind Einzelelemente der Mischklappe beispielsweise durch jeweils zwei trogförmige Bleche, die mit ihren Hohlräumen einander zugewandt und entlang ihrer Kanten zusammengefügt sind, gebildet. Das Vorsehen von Einzelelementen verhindert eine Schichtung der Luft in Folge einer besseren Vermischung der beiden Luftströme.

Ausgehend von diesem Stand der Technik ist es Aufgabe der Erfindung, eine verbesserte Rückschlagklappe zur Verfügung zu stellen- Diese Aufgabe wird gelöst durch eine Rückschlagklappe mit den Merkmalen des Anspruchs 1. Vorteilhafte Ausgestaltungen sind Gegenstand der Unteransprüche.

Erfindungsgemäß ist eine Rückschlagklappe zur selbsttätigen Verhinderung einer Luftrückströmung in einem Luftführungsgehäuse und/oder eines Einströmens eines Luftstroms entgegen der normalen Strömungsrichtung in einen Luftkanal vorgesehen, die mindestens zwei Luftklappen-Öffnungen oder Luftklappen-Schlitze aufweist. Durch das Vorsehen zweier Luftklappen-Öffnungen oder Luftklappen-Schlitzen wird eine verbesserte Vermischung zweier Luftströme ermöglicht.

Vorzugsweise liegt die Rückschlagklappe in geschlossener Stellung an einer Wand oder einem Vorsprung an, wobei die Wand oder der Vorsprung die mindestens eine Luftklappen-Öffnung oder den mindestens einen Luftklappen-Schlitz verdeckt. Dabei weist die Rückschlagklappe bevorzugt eine Form auf, welche im Wesentlichen versetzt zu der Wand-Öffnung ausgebildet ist, so dass im geschlossenen Zustand verdeckende Bereich der Wand mit Öffnungen der Rückschlagklappe und umgekehrt Öffnungen der Wand mit verdeckenden Bereichen der Rückschlagklappe fluchten.

Die Rückschlagklappe ist bevorzugt durch die Wirkung der Schwerkraft selbsttätig schließend ausgebildet, jedoch kann auch zur Unterstützung der Schließwirkung beispielsweise eine Feder vorgesehen sein.

Bevorzugt ist die Rückschlagklappe mit einem Gegengewicht ausgebildet. Dadurch wird eine schnellere oder leichtere Öffnung gewährleistet. Dies ist insbesondere dann von Vorteil, wenn die Rückschlagklappe mittels eines Luftstroms geschlossen wird. Das Gegengewicht ist dabei maximal so groß, dass die Klappe in einer durch Luftströme unbelasteten Stellung, eine indifferente Gleichgewichtslage einnimmt, besonders bevorzugt aber geringer.

Vorteilhafterweise ist die Rückschlagklappe zumindest bereichsweise mit einem weichen Kunststoff, beispielsweise einem thermoplastischen Elastomer, Silikon oder einem Schaumstoff beschichtet oder beklebt um insbesondere Anschlaggeräusche zu dämpfen.

Bevorzugt bildet die Rückschlagklappe gemeinsam mit der Wand eine Baugruppe, die einfach in ein Gehäuse, beispielsweise in ein Luftführungsgehäuse einer Kraftfahrzeug-Klimaanlage, eingebaut werden kann.

Zur Verbesserung der Verwirbelung kann die Rückschlagklappe derart angeordnet sein, dass sie in einem Nebenluftkanal angeordnet ist, wobei der Nebenluftkanal in einen Hauptluftkanal einmündet, der zumindest in einem Bereich um die Einmündungsstelle in einer Ebene angeordnet ist, wobei der Nebenluftkanal quer zur Ebene einmündet. Der Hauptluftkanal und/oder der Nebenluftkanal können im Bereich der Einmündungsstelle eine Biegung aufweisen.

Im Folgenden wird die Erfindung anhand eines Ausführungsbeispiels mit Varianten unter Bezugnahme auf die Zeichnung im Einzelnen erläutert. Es zeigen:

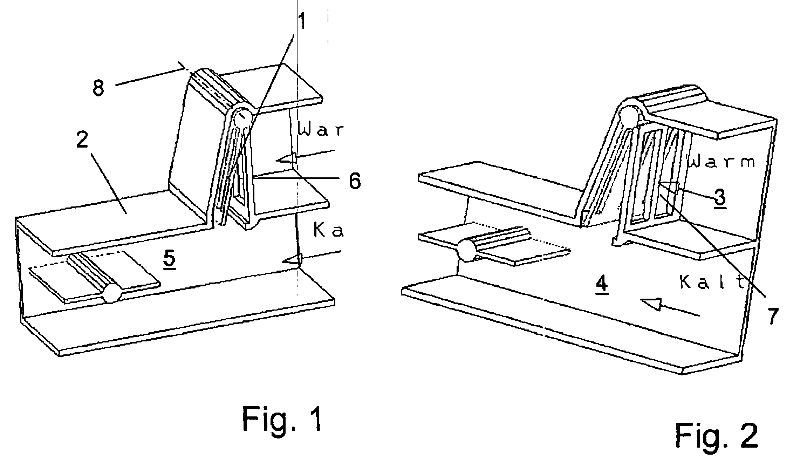

- Fig. 1: eine perspektivische geschnittene Darstellung eines Luftführungsgehäuses mit einer Rückschlagklappe gemäß dem ersten Ausführungsbeispiel in geöffneter Stellung,
- Fig. 2: eine Darstellung einer anderen Perspektive des Luftführungsgehäuses mit Rückschlagklappe von Fig. 1,

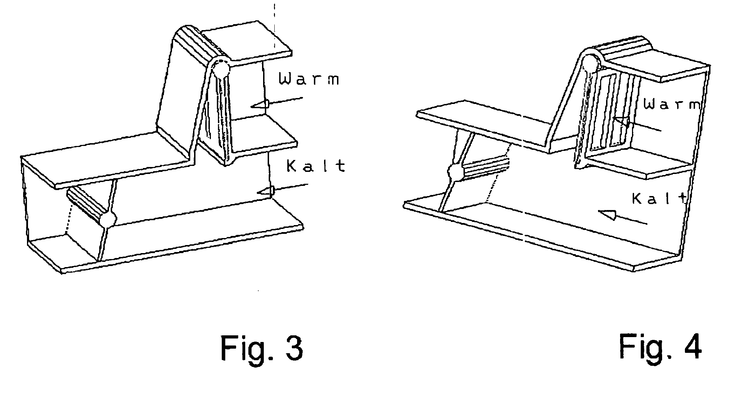

- Fig. 3: eine perspektivische geschnittene Darstellung eines Luftführungsgehäuses mit Rückschlagklappe von Fig. 1 in geschlossener Stellung,
- Fig. 4: eine Darstellung einer anderen Perspektive des Luftführungsgehäuses mit Rückschlagklappe von Fig. 3,
- Fig. 5: eine Draufsicht auf die Rückschlagklappe von Fig. 1,
- Fig. 6: eine Draufsicht auf eine Rückschlagklappe gemäß einer ersten Variante,
- Fig. 7: eine Draufsicht auf eine Rückschlagklappe gemäß einer zweiten Variante,
- Fig. 8: eine perspektivische schematische Darstellung eines Ausschnitts eines Luftführungsgehäuses mit einer ersten speziellen Ausführungsform der Rückschlagklappenanordnung in geöffneter Stellung,
- Fig. 9: die Rückschlagklappenanordnung von Fig. 8 in geschlossener Stellung,
- Fig. 10: eine perspektivische schematische Darstellung eines Luftführungsgehäuses mit zwei Rückschlagklappeanordnungen gemäß der zweiten Ausführungsform der Rückschlagklappenanordnung,
- Fig. 11: einen Schnitt durch eine wasserseitig geregelte Kraftfahrzeug-Klimaanlage,
- Fig. 12a: ein Luftführungsgehäuse mit offener Rückschlagklappe gemäß dem Stand der Technik,
- Fig. 12b: das Luftführungsgehäuse von Fig. 12a mit geschlossener Rückschlagklappe,
- Fig. 13a: ein weiteres Luftführungsgehäuse mit offener Rückschlagklappe gemäß dem Stand der Technik,
- Fig. 13b: das Luftführungsgehäuse von Fig. 13a mit geschlossener Rückschlagklappe,
- Fig. 14a: eine weitere der Erfindung folgende Variante eines Luftführungsgehäuses mit offener Rückschlagklappe mit Gegengewicht, und
- Fig. 14b: das Luftführungsgehäuse von Fig. 14a mit geschlossener Rückschlagklappe.

Eine Rückschlagklappe 1 zur Verhinderung einer Luftrückströmung ist in einem Luftführungsgehäuse 2 einer Kraftfahrzeug-Klimaanlage am Endbereich des vom Heizer kommenden Warmluftkanals 3 bevor dieser in den vom Verdampfer kommenden Kaltluftkanal 4 einmündet angeordnet. Der Kaltluftkanal 4 wird im Folgenden von der Einmündungsstelle an als Mischluftkanal 5 bezeichnet. Vorliegend verlaufen Warmluftkanal 3 und Kaltluftkanal 4 parallel zueinander, wobei der Warmluftkanal 3 zur Einleitung in den Kaltluftkanal 4 umgelenkt wird.

Am Ende des Warmluftkanals 3 ist - etwa senkrecht zum Warmluftkanal 3 und Kaltluftkanal 4 verlaufend - eine Wand 6 mit einer Mehrzahl von, vorliegend zwei, rechteckförmigen Wand-Öffnungen 7 vorgesehen, durch welche der Warmluftstrom bei geöffneter Rückschlagklappe 1 strömen kann. Am vom Kaltluftkanal 4 beabstandeten Ende der Wand 6 ist die Schwenkachse 8 der Rückschlagklappe 1 angeordnet, wobei im eingebauten Zustand die Schwenkachse 8 horizontal verläuft und oben angeordnet ist, so dass die Rückschlagklappe 1 durch die Schwerkraft automatisch schließt, sobald der Warmluftstrom zu gering oder kein Warmluftstrom vorhanden ist. Die Rückschlagklappe 1 entspricht einer herkömmlichen rechteckförmigen Rückschlagklappe, weist aber vorliegend drei rechteckförmige, relativ schmal ausgebildete Luftklappen-Öffnungen 11 auf, wobei im geschlossenen Zustand der Rückschlagklappe 1 diese Luftklappen-Öffnungen 11 versetzt zu den Wand-Öffnungen 7 angeordnet sind, so dass die Wand-Öffnungen 7 durch Zwischen- und Randbereiche der Luftklappen-Öffnungen verschlossen werden.

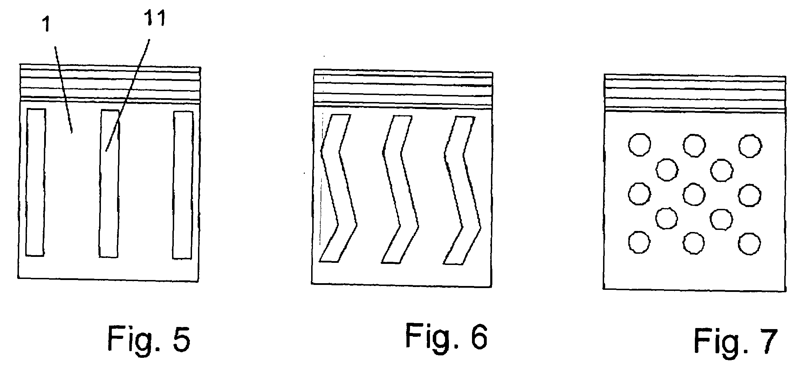

Varianten der Öffnungsformen in der Rückschlagklappe sind in den Figuren 6 und 7 dargestellt. So sind beispielsweise zick-zack-förmig verlaufende Öffnungen (Fig. 6) oder kreisförmige Öffnungen (Fig. 7) möglich. Die Öffnungen in der Wand entsprechen in ihrer Form den Öffnungen der Rückschlagklappe, jedoch sind die Öffnungen versetzt angeordnet, so dass in geschlossener Stellung der Rückschlagklappe kein Durchgang freigegeben ist. Insbesondere bei einer Vielzahl kleiner Öffnungen können diese auch gruppiert angeordnet sein.

Neben einer einteilig ausgebildeten Rückschlagklappe mit Luftklappen-Öffnungen kann die Rückschlagklappe auch mehrteilig ausgebildet sein oder es kann eine Anordnung mit mehreren etwas beabstandet voneinander angeordneten Rückschlagklappen für einen Luftkanal vorgesehen sein, durch welche die gleichen Effekte, nämlich im geöffneten Zustand eine Verwirbelung der ausströmenden Luft und damit eine verbesserte Vermischung der Luftströme sowie ein Verhindern eines Einströmens der Kaltluft in den Warmluftkanal, bewirkt werden können.

An Stelle der Luftklappen-Öffnungen können beispielsweise auch gleichwirkende Schlitze vorgesehen sein, welche mit Öffnungen in einer Wand oder mit gleichwirkenden Vorsprüngen zusammenwirken. Auch das Vorsehen mehrerer Rückschlagklappen vor Öffnungen die von einem Luftkanal in einen zweiten Luftkanal münden, entspricht in der Wirkungs dem Vorsehen von Schlitzen, wobei die Luftklappen miteinander verbunden oder unabhängig voneinander sein können.

Im Folgenden ist eine Rückschlagklappenanordnung anhand zweier spezieller, bevorzugter Ausführungsformen näher erläutert, wobei die Rückschlagklappen jeweils auf erfindungsgemäße Weise ausgebildet sind, insbesondere wie zuvor in den drei Ausführungsbeispielen beschrieben.

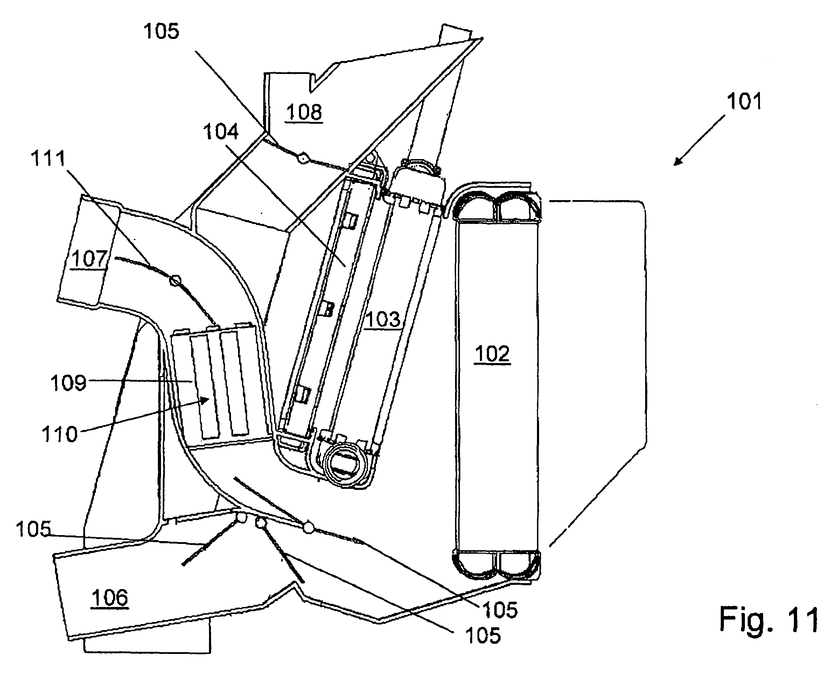

Eine wasserseitig geregelte Kraftfahrzeug-Klimaanlage 101 mit einem Verdampfer 102, einem Heizkörper 103 und einem PTC-Zuheizer 104, umfasst ein Luftkanalsystem mit einer Mehrzahl von betätigten Luftmisch- und Absperrklappen 105, welche insbesondere vor Abzweigungen von Luftkanälen, wie dem Luftkanal 106 zum Fußraum, dem Luftkanal 107 zur Belüftung oder dem Luftkanal 108 zur Windschutzscheibe (Defrost). Um ein Überströmen von kalter Luft zu verhindern, sind Rückschlagklappen 109 vorgesehen, wobei in Fig. 11 nur eine davon dargestellt ist. In einer alternativen, nicht dargestellten Ausführungsform, kann der Verdampfer 102 auch entfallen, so dass eine Heizungsanlage vorliegt, wobei der Kaltluftkanal 4 einem Frischluftkanal entspricht.

Vorliegend ist in Fig. 11 eine einzonige Klimaanlage 101 dargestellt, jedoch ist die Erfindung auch auf zwei- und mehrzonige Klimaanlagen anwendbar, wobei sich die Zahl der Rückschlagklappen entsprechend erhöht.

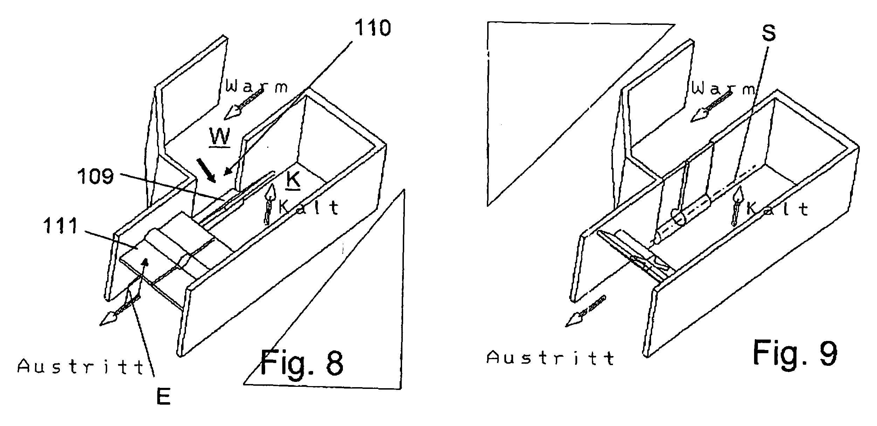

Das Prinzip zur weiteren Verbesserung der Mischung der Luftströme wird im Folgenden unter Bezugnahme auf die Figuren 8 bis 10 näher erläutert, wobei die Figuren 8 und 9 im Wesentlichen dem Bereich der Rückschlagklappe 109 von Fig. 11 entsprechen.

Vorliegend wird die Hauptströmungsrichtung durch den Kaltluftstrom (Haupt- oder vorliegend Kaltluftkanal K) zum Austrittsöffnung definiert, wobei der Hauptluftstrom im Bereich der Rückschlagklappe 109 um vorliegend 90" umgelenkt wird, wie durch Pfeile dargestellt- Die Pfeile im Hauptluftkanal definieren eine Ebene E, in welcher der Hauptluftstrom verläuft.

An der Einmündungsstelle 110 wird dem Hauptluftstrom ein Warmluftstrom (Neben- oder vorliegend Warmluftkanal W) zugeführt, wobei eine Rückschlagklappe 109, welche in ihrem geschlossen Zustand parallel zur Ebene E integriert in und parallel verlaufend zu der entsprechenden Wand des Kaltluftkanals K, durch welche der Warmluftkanal K dem Kaltluftkanal K zugeführt wird, angeordnet ist (vgl. Fig. 9), und welche ein Einströmen von Kaltluft aus dem Kaltluftkanal K in den Warmluftkanal W verhindert. Vorliegend mündet der Warmluftkanal W nach einer 90°-Biegung etwa senkrecht in den Kaltluftkanal K ein, wobei die Ebene, in welcher der Warmluftkanal W angeordnet ist, die Ebene, in welcher der Kaltluftkanal K angeordnet ist, vorliegend in einem Winkel von 90° schneidet.

Vorliegend verläuft die Schwenkachse S der Rückschlagklappe 109 parallel zur Schnittgeraden der beiden Ebenen, in welchen die Kanäle K und W verlaufen, wobei die Rückschlagklappe 109 als stehende Rückschlagklappe 109 ausgebildet ist. Alternativ kann es sich hierbei auch um eine hängende Rückschlagklappe handeln, oder die Schwenkachse kann auch parallel zum die Strömungsrichtung des eintrittsseitigen Kaltluftstroms verdeutlichenden Pfeil verlaufen, insbesondere auf der eintrittsseitigen Seite (in Fig. 9 rechts).

Der Rückschlagklappenanordnung nachfolgend im gemeinsamen Luftkanal angeordnet ist symbolisch eine Klappe 111 zur Drosselung des Luftstroms dargestellt, wobei an Stelle der Klappe 111 auch beliebige andere Elemente zur Drosselung des Luftstroms vorgesehen sein können.

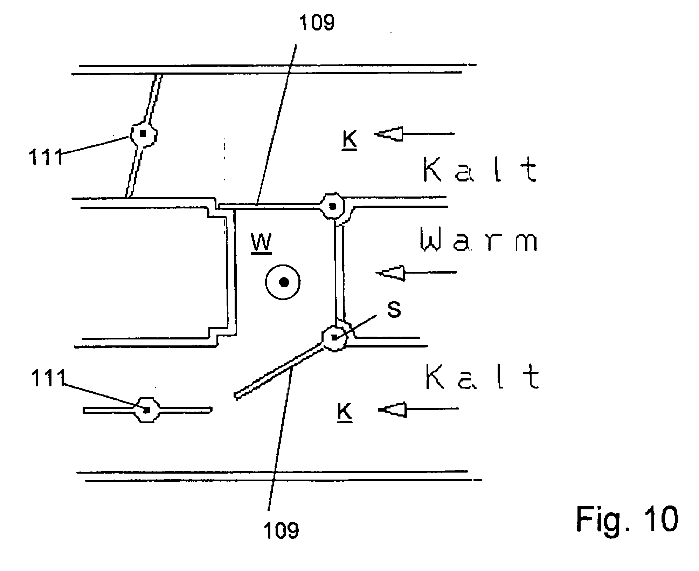

Gemäß der in Fig. 10 dargestellten zweiten Ausführungsform sind zwei Kaltluftkanäle K vorgesehen, wobei jeder der Kaltluftkanäle K eine Ebene E definiert, die vorliegend zusammenfallen (Blattebene). Der vom Warmluftkanal K kommende Warmluftstrom strömt entgegen der Blickrichtung, wie durch den Pfeil, von dem nur die Pfeilspitze ersichtlich ist, angedeutet, und wird auf Grund einer geschlossenen ersten Rückschlagklappe 109 an der Einmündungsstelle 110 zum in Fig. 10 oben dargestellten ersten Kaltluftkanal K (bewirkt durch die nachfolgende Klappe 111, die geschlossen ist, weshalb der Stau-Luftdruck an der Einmündungsstelle 110 im ersten Kaltluftkanal K größer als im Warmluftkanal W ist) und einer geöffneten zweiten Rückschlagklappe 109 zum in Fig. 10 unten dargestellten zweiten Kaltluftkanal K vorliegend ausschließlich in den zweiten Kaltluftkanal K geleitet. Auch in diesem Fall ist die Ebene, in welcher der Warmluftkanal W angeordnet ist, senkrecht zur Ebene E, in welcher der jeweilige Kaltluftkanal K angeordnet ist, angeordnet.

In Folge der schrägen oder bevorzugt der senkrechten Anordnung der Ebenen, erfolgt eine verbesserte Vermischung der Warm- und Kaltluftströme bei zumindest teilweise geöffneter Rückschlagklappe 109.

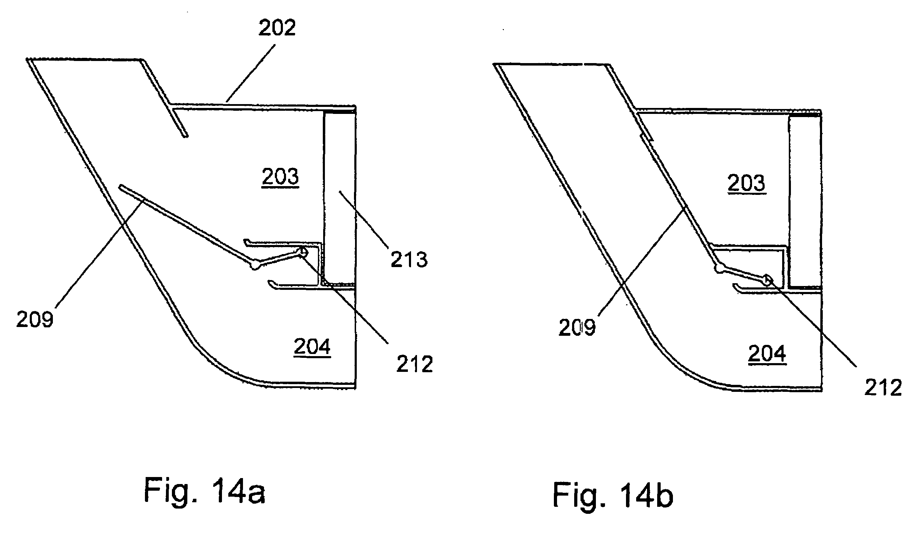

Die Figuren 14a und 14b zeigen die Anordnung einer Rückschlagklappe 209 mit einem Gegengewicht 212. Die Rückschlagklappe 209 zur Verhinderung einer Luftrückströmung ist in einem Luftführungsgehäuse 202 einer Kraftfahrzeug-Klimaanlage am Endbereich des vom Heizkörper 213 kommenden Warmluftkanals 203 bevor dieser in den vom Verdampfer (in den Figuren nicht dargestellt) kommenden Kaltluftkanal 204 einmündet, angeordnet. Im dargestellten Ausführungsbeispiel verlaufen Warmluftkanal 203 und Kaltluftkanal 204 im Wesentlichen parallel zueinander, wobei der Kaltluftkanal 204 zur Einleitung in den Mischbereich mit dem Warmluftkanal 203 umgelenkt wird.

Die Form der Schließfläche der Rückschlagklappe 209 mit einer oder mehreren Luftklappen-Öffnungen entspricht im Wesentlichen einer der im Vorangehenden beschriebenen Ausführungsbeispiele.

Fig. 14a zeigt die Rückschlagklappe 209, in im Wesentlichen den Warmluftkanal 203 freigebender Stellung. Ist der Warmluftstrom nur sehr gering oder ist kein Warmluftstrom vorhanden, so schließt die Rückschlagklappe 209 durch die Schwerkraft, insbesondere des Gegengewichts 212 automatisch, wie in Fig. 14b dargestellt. Das Gegengewicht 212 kann beispielsweise als zusätzliches Gewicht am Ende eines Hebelarms 214, angebracht und/oder direkt in den Hebelarm 214 integriert sein. Der Hebelarm 214 ist vorteilhafterweise in Bezug zur Drehachse der Rückschlagklappe 209 gegenüberliegend der Schließfläche der Rückschlagklappe 209 angeordnet. Die Form des Hebelarms, wie beispielsweise die Länge, Stärke oder der Winkel zur Schließfläche der Klappe ist insbesondere an den zur Verfügung stehenden Bauraum angepasst.

Vorteilhaft an einer derartigen Anordnung ist, dass zum Schließen der Klappe keine zusätzliche Kraft von außen wie beispielsweise eine über einen Motor aufzubringende Kraft oder einer Federkraft erforderlich ist. Dieser Mechanismus ist zudem wartungsarm und platzsparend. Ferner werden stark instationäre Zustände ("Klappenflattern") vermieden, da durch das Gegengewicht die Klappenbewegung insgesamt träger wird.

## Patentansprüche

1. Heizungs- und/oder Klimaanlage mit einem Luftführungsgehäuse (2) und einer Rückschlagklappe (1) zur selbsttätigen Verhinderung einer Luftrückströmung in dem Luftführungsgehäuse (2) und/oder eines Einströmens eines Luftstroms entgegen der normalen Strömungsrichtung in einen Luftkanal (3), **dadurch gekennzeichnet, dass** die Rückschlagklappe (1) mindestens zwei Luftklappen-Öffnungen (11) oder Luftklappen-Schlitze aufweist.

2. Heizungs- und/oder Klimaanlage nach Anspruch 1, **dadurch gekennzeichnet, dass** die Rückschlagklappe (1) in geschlossener Stellung an einer Wand (6) oder einem Vorsprung anliegt, wobei die Wand (6) oder der Vorsprung die Luftklappen-Öffnungen (11) oder die Luftklappen-Schlitze verdeckt.

3. Heizungs- und/oder Klimaanlage nach Anspruch 2, **dadurch gekennzeichnet, dass** die Rückschlagklappe (1) eine Form aufweist, welche im Wesentlichen versetzt zu der Wand-Öffnung (7) ausgebildet ist, so dass im geschlossenen Zustand verdeckende Bereiche der Wand (6) mit Öffnungen der Rückschlagklappe (1) und umgekehrt Öffnungen der Wand (6) mit verdeckenden Bereichen der Rückschlagklappe (1) fluchten.

4. Heizungs- und/oder Klimaanlage nach einem der vorhergehenden Ansprüche, **dadurch gekennzeichnet, dass** die Rückschlagklappe (1) durch die Wirkung der Schwerkraft selbsttätig schließend ausgebildet ist.

5. Rückschlagklappe nach einem der vorhergehenden Ansprüche, **dadurch gekennzeichnet, dass** die Rückschlagklappe (1) gemeinsam mit der Wand eine Baugruppe bildet.

6. Heizungs- und/oder Klimaanlage nach einem der vorhergehenden Ansprüche, **dadurch gekennzeichnet, dass** die Rückschlagklappe (1) in einem Endbereich eines Warmluftkanals (3) angeordnet ist, bevor dieser in einen Kaltluftkanal (4) mündet.

7. Heizungs- und/oder Klimaanlage nach einem der vorhergehenden Ansprüche, **dadurch gekennzeichnet, dass** die Rückschlagklappe (1) in geschlossener Stellung an einer Wand (6) anliegt und im Falle einer mehrteiligen Ausbildung der Rückschlagklappe (1) mindestens eine, im Falle einer Ausbildung mit mindestens einer Luftklappen-Öffnung (11) mindestens zwei Wand-Öffnungen (7) in der Wand (6) verschließt.

8. Heizungs- und/oder Klimaanlage nach Anspruch 7, **dadurch gekennzeichnet, dass** die Rückschlagklappe (1) eine Form aufweist, welche im Wesentlichen versetzt zu der Wand-Öffnung (7) ausgebildet ist, so dass verdeckende Bereich mit Öffnungen und umgekehrt Öffnungen mit verdeckenden Bereichen fluchten.

9. Heizungs- und/oder Klimaanlage nach einem der vorhergehenden Ansprüche, **dadurch gekennzeichnet, dass** die Heizungs- und/oder Klimaanlage zumindest eines der folgenden Bauteile umfasst: Wärmetauscher, Heizkörper (103), Verdampfer (102), Zuheizer, insbesondere PTC-Zuheizer (104), Filter, Temperaturmischklappe, einen oder mehrere Strömungskanäle (3, 4, 5, 106, 107, 108) und eine oder mehrere Steuerklappen (105) zur Mischung und/oder Verteilung der Luft auf die Strömungskanäle (3, 4, 5, 106, 107, 108).

## Claims

1. Heating and/or air conditioning system with an air duct housing (2) and a check valve (1) for the automatic prevention of an air return flow in the air duct housing (2) and/or of the entry of an air flow into an air duct (3) against the normal direction of flow, **characterised in that** the check valve (1) has at least two damper openings (11) or damper slots.

2. Heating and/or air conditioning system according to claim 1, **characterised in that** the check valve (1) bears against a wall (6) or a projection in the closed position, the wall (6) or projection covering the damper openings (11) or damper slots.

3. Heating and/or air conditioning system according to claim 2, **characterised in that** the check valve (1) has a shape which is substantially offset relative to the wall opening (7), so that covering regions of the wall (6) are in alignment with openings of the check valve (1) in the closed position and vice versa openings of the wall (6) are in alignment with covering regions of the check valve (1).

4. Heating and/or air conditioning system according to any of the preceding claims, **characterised in that** the check valve (1) is designed to close automatically under the action of gravity.

5. Heating and/or air conditioning system according to any of the preceding claims, **characterised in that** the check valve (1) forms an assembly together with the wall.

6. Heating and/or air conditioning system according to any of the preceding claims, **characterised in that** the check valve (1) is located in an end region of a warm air duct (3) before its termination in a cold air duct (4).

7. Heating and/or air conditioning system according to any of the preceding claims, **characterised in that** the check valve (1) bears against a wall (6) in the closed position and **in that**, in a multi-part design of the check valve (1), it it closes at least one wall opening and, in a design with at least one check valve opening (11), at least two wall openings (7) in the wall (6).

8. Heating and/or air conditioning system according to claim 7, **characterised in that** the check valve (1) has a shape which is substantially offset relative to the wall opening (7), so that covering regions are in alignment with openings and vice versa openings are in alignment with covering regions.

9. Heating and/or air conditioning system according to any of the preceding claims, **characterised in that** the heating and/or air conditioning system comprises at least one of the following components: heat exchanger, heater (103), evaporator (102), auxiliary heater, in particular PTC auxiliary heater (104), filter, temperature blend damper, one or more flow ducts (3, 4, 5, 106, 107, 108) and one or more control dampers (105) for blending and/or distributing the air among the flow ducts (3, 4, 5, 106, 107, 108).

## Revendications

1. Système de chauffage et / ou de climatisation comprenant un carter de guidage d'air (2) et un clapet antiretour (1) servant à empêcher, de façon automatique, l'écoulement en retour de l'air, dans le carter de guidage d'air (2) et / ou une entrée d'un flux d'air dans un conduit d'air (3) dans le sens inverse à la direction normale d'écoulement,
**caractérisé en ce que** le clapet antiretour (1) présente au moins deux ouvertures de volet d'air (11) ou fentes de volet d'air.

2. Système de chauffage et / ou de climatisation selon la revendication 1, **caractérisé en ce que** le clapet antiretour (1), en position fermée, est en appui sur une paroi (6) ou sur une partie saillante, où la paroi (6) ou la partie saillante recouvre les ouvertures de volet d'air (11) ou les fentes de volet d'air.

3. Système de chauffage et / ou de climatisation selon la revendication 2, **caractérisé en ce que** le clapet antiretour (1) présente une forme qui est configurée en étant sensiblement décalée par rapport à l'ouverture de paroi (7), de sorte que, à l'état fermé, des zones couvrantes de la paroi (6) sont alignées sur des ouvertures du clapet antiretour (1) et, inversement, des ouvertures de la paroi (6) sont alignées sur des zones couvrantes du clapet antiretour (1).

4. Système de chauffage et / ou de climatisation selon l'une quelconque des revendications précédentes, **caractérisé en ce que** le clapet antiretour (1) est configuré en se fermant automatiquement sous l'effet de la force de gravité.

5. Clapet antiretour selon l'une quelconque des revendications précédentes, **caractérisé en ce que** le clapet antiretour (1), avec la paroi, forme un ensemble.

6. Système de chauffage et / ou de climatisation selon l'une quelconque des revendications précédentes, **caractérisé en ce que** le clapet antiretour (1) est disposé dans une zone d'extrémité d'un conduit d'air chaud (3), avant que celui-ci débouche dans un conduit d'air froid (4).

7. Système de chauffage et / ou de climatisation selon l'une quelconque des revendications précédentes, **caractérisé en ce que** le clapet antiretour (1), en position fermée, est en appui sur une paroi (6) et, dans le cas d'une configuration du clapet antiretour (1), en plusieurs parties, obture au moins une ouverture de paroi, dans le cas d'une configuration avec au moins une ouverture de volet d'air (11), obture au moins deux ouvertures de paroi (7) placées dans la paroi (6).

8. Système de chauffage et / ou de climatisation selon la revendication 7, **caractérisé en ce que** le clapet antiretour (1) présente une forme qui est configurée en étant sensiblement décalée par rapport à l'ouverture de paroi (7), de sorte que des zones couvrantes sont alignées sur des ouvertures et, inversement, des ouvertures sont alignées sur des zones couvrantes.

9. Système de chauffage et / ou de climatisation selon l'une quelconque des revendications précédentes, **caractérisé en ce que** le système de chauffage et / ou de climatisation comprend au moins l'un des composants suivants : un échangeur de chaleur, un radiateur (103), un évaporateur (102), un dispositif de chauffage supplémentaire, en particulier un dispositif de chauffage supplémentaire (104) à coefficient de température positif (CTP), un filtre, un volet mélangeur de température, un ou plusieurs conduits d'écoulement (3, 4, 5, 106, 107, 108) et un ou plusieurs volets de commande (105) servant au mélange et / ou à la répartition de l'air dans les conduits d'écoulement (3, 4, 5, 106, 107, 108) .
